## Europäisches Patentamt
## European Patent Office
## Office européen des brevets

(19)

(11) Veröffentlichungsnummer: **0 025 853**
**B1**

(12)

# EUROPÄISCHE PATENTSCHRIFT

(45) Veröffentlichungstag der Patentschrift:
28.07.82

(51) Int. Cl.³: **H 02 H 9/06**, H 02 H 3/22

(21) Anmeldenummer: **80104742.4**

(22) Anmeldetag: **11.08.80**

(54) Schaltungsanordnung zum Überspannungsschutz.

(30) Priorität: **23.08.79 DE 2934141**

(43) Veröffentlichungstag der Anmeldung:
**01.04.81 Patentblatt 81/13**

(45) Bekanntmachung des Hinweises auf die Patenterteilung:
**28.07.82 Patentblatt 82/30**

(84) Benannte Vertragsstaaten:
**CH FR GB IT LI NL SE**

(56) Entgegenhaltungen:
**DE-A-2 714 411**
**DE-C-2 137 344**
**US-A-3 795 840**

**ELEKTRIE, Band 32, Nr. 7, 1978 H. STOCKMANN «Blitzschutz und elektronische Einrichtungen» Seiten 376 bis 379**

(73) Patentinhaber: **SIEMENS AKTIENGESELLSCHAFT**
**Berlin und München, Postfach 22 02 61,
D-8000 München 22 (DE)**

(72) Erfinder: **Schuhbauer, Ernst, Dipl.-Ing.,
Sonnwendjochstrasse 86, D-8000 München 82 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Schaltungsanordnung zum Überspannungsschutz

Die Erfindung betrifft eine Schaltungsanordnung zum Überspannungsschutz von über eine Anschlussleitung angeschalteten elektronischen Anschlusschaltungen für Endstellen der Fernmelde-, insbesondere der Fernschreibtechnik, mit Überspannungsableitern, die von den Adern der Anschlussleitung zum Masseanschluss von Anschlussgeräten geschaltet sind, sowie mit einer Längsinduktivität und bedarfsweise einem Widerstand in jeder Ader, die zusammen mit einem zwischen die Adern oder von den Adern zum Masseanschluss des Anschlussgerätes geschalteten Kondensator einen Spannungsteiler bilden.

Zum Schutz elektronischer Anschlusschaltungen gegen auf einer Anschlussleitung auftretende Überspannungen, die sowohl zwischen den Adern als auch zwischen einer Ader und Erde auftreten können, ist bereits eine Schaltung bekannt (DE-C3 21 37 344), bei der von den Adern der Anschlussleitung zwei Überspannungsableiter gegen Gerätemasse geschaltet sind. Zur Überbrückung der Zündverzugszeit bzw. zur Überbrückung der Dauer der Differenz der Zündverzugszeit der beiden Überspannungsableiter, ist in jeder Ader eine Induktivität und bedarfsweise ein Widerstand vorgesehen, die während dieser Zeiten den Strom begrenzen. Zusammen mit Kondensatoren, die zwischen die Adern bzw. von diesen zur Gerätemasse geschaltet sind, bilden diese Induktivitäten und Widerstände einen Spannungsteiler, der die Spannung begrenzt. Eine solche Schaltung bietet einen ausreichenden Überspannungsschutz für die zu schützende Schaltung unabhängig davon, ob die Gerätemasse mit Erde verbunden ist (Schutzklasse 1) oder nicht (Schutzklasse 2). Im ersten Fall wird die bei jedem Überspannungsimpuls auftretende Aufladung der Masse des Gerätes in sehr kurzer Zeit über den Erdschutzleiter zur Erde abgeführt. Im zweiten Fall dagegen, wenn kein Erdschlussleiter vorgesehen ist, führt jeder Überspannungsimpuls zu einer Aufladung des Gerätes, für dessen Entladung sich, wegen der praktisch stets vorhandenen Gerätekapazität und den hohen in Schutzklasse 2 geforderten Isolationswiderständen, Entladezeitkonstanten ergeben, die zu einer Entladezeitdauer von einigen Minuten führen können. Die oftmals sehr hohe Aufladung während einer beträchtlich langen Zeitdauer bedeutet, dass bei Berührung des Gerätes durch eine Bedienungsperson diese einen empfindlichen elektrischen Schlag erhalten kann. Für den praktischen Einsatz bedeutet das einen erheblichen Nachteil.

Aufgabe der Erfindung ist es, eine Schaltung zum Schutz gegen Überspannungen anzugeben, die gegen kurzzeitige Überspannungen die gleiche Sicherheit bietet wie die bekannte Schutzschaltung, die aber darüberhinaus die Aufladung von Anschlusschaltungsgeräten auch dann verhindert, wenn für diese kein Erdschutzleiter vorgesehen ist.

Gemäss der Erfindung wird das dadurch erreicht, dass Widerstände mit hohem Widerstandswert zwischen die beiden Adern der Anschlussleitung bzw. von den Adern zur Gerätemasse geschaltet sind.

Damit ist der Vorteil verbunden, dass die Aufladung der Gerätemasse in wesentlich kürzerer Zeit als ohne diese Widerstände über die meist geerdete Anschlussleitung abgeleitet wird.

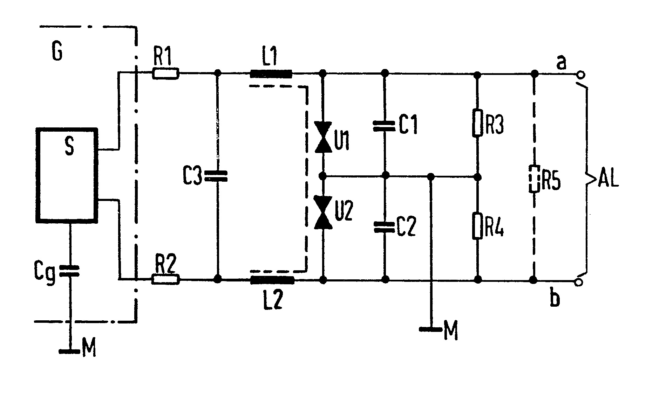

Einzelheiten der Erfindung werden an einem in der Zeichnung dargestellten Ausführungsbeispiel beschrieben. Dort ist eine in einem Anschlussgerät G angeordnete Sendeschaltung S einer Anschlusschaltung einer Fernschreibteilnehmerendstelle dargestellt, die über die Anschlussleitung AL mit ihren beiden Adern a und b an eine hier nicht dargestellte ferne Vermittlungsstelle angeschlossen ist. Zum Schutz gegen Überspannungen dienen die in bekannter Weise angeordneten Überspannungsableiter U1 und U2, die bei Auftreten einer Überspannung zünden und eine niederohmige Entladestrecke bilden. Sowohl zur Überbrückung von Zündverzugszeiten als auch zur Überbrückung einer durch Differenz der Zündverzugszeiten der beiden Überspannungsableiter verursachten Verzögerungszeit, wird eine Strombegrenzung mit Hilfe der beiden Induktivitäten L1 und L2 und den im Ausführungsbeispiel vorgesehenen beiden Widerständen R1 und R2 erreicht. Eine Spannungsreduzierung ergibt sich durch die aus den genannten Induktivitäten L1 und L2 und den Widerständen R1 und R2 einerseits und den zwischen die Adern a und b geschalteten Kondensator C3 bzw. C1 und C2 andererseits gebildeten Spannungsteiler. Durch den Einsatz der Kondensatoren C3 bzw. C1 und C2 wird darüberhinaus auch noch eine sichere Löschung der gezündeten Überspannungsableiter nach Beendigung eines Überspannungsimpulses erreicht. Diese Kondensatoren erzeugen nämlich in Zusammenwirkung mit den beiden Induktivitäten L1 und L2 nach Beendigung eines Überspannungsimpulses eine kurze Unterschwingung, die die Überspannungsableiter sicher löscht. Bei dem Anschlussgerät G, das die zu schützende elektronische Sendeschaltung S enthält, handelt es sich um ein Gerät, das keinen Erdschutzleiter besitzt. Es besitzt jedoch berührbare Masseteile M, wobei die unvermeidlichen Betriebskapazitäten zwischen diesen Masseteilen M und der Schaltung des Anschlussgerätes G mit Cg bezeichnet sind. Treten in einem solchen Falle Überspannungsimpulse auf, so lädt sich das Anschlussgerät G und damit auch die Masseteile auf. Für die Entladung gilt, wie bereits erwähnt wurde, eine sehr grosse Entladezeitkonstante. Die erfindungsgemäss zwischen die Adern a und b der Anschlussleitung AL und Masse geschalteten Widerstände R3 und R4, deren Wert sehr hochohmig ist und beispielsweise 12 MOhm betragen kann, reduzieren die Entladezeit auf einen nur Bruchteile von Sekunden umfassenden Zeitraum. Der Potentialausgleich kann dabei über die meist vorhandene Erdung der Anschlussleitung AL an ihrem fernen Ende (z.B. Mittenerdung der Stromquelle) stattfinden. Selbst wenn die Anschlussleitung AL an ihrem fernen Ende keine Erdung aufweist, ergibt sich eine erhebliche Verbesserung gegenüber den bisherigen Massnahmen, da dann stets eine Parallelschaltung einer Reihe von Isolationswiderständen vorliegt oder am fernen Ende Ableiter vorgesehen sind.

Im gezeigten Ausführungsbeispiel wurde davon ausgegangen, dass während des Betriebes die beiden Adern im Takt der Fernschreibzeichen verbunden bzw. unterbrochen werden. Wegen dieser Unterbrechung müssen an beiden Adern Ableitwiderstände vorgesehen werden. Bei Schaltungen, in denen die beiden Adern dauernd relativ niederohmig verbunden sind, beispielsweise bei Empfangsschaltungen, genügt ein Widerstand pro Adernpaar, der von einer beliebigen Ader gegen Masse geschaltet wird. In diesem Fall ist entweder nur der Widerstand R3 oder nur der Widerstand R4 vorgesehen.

Bei Sendeschaltungen können die notwendigen zwei Widerstände auch so angeordnet werden, dass nur von einer der beiden Adern ein Widerstand zur Masse führt und der andere Widerstand die beiden Adern überbrückt. In diesem Fall ist neben einem der Widerstände R3 oder R4 noch der gestrichelt eingezeichnete Widerstand R5 vorgesehen. Dies hat den Vorteil, dass wegen der fehlenden Parallelschaltung bei leitenden Sendern ein niedrigerer Wert des Widerstandes gewählt werden kann. Die Aufgabe dieses zweiten, parallel liegenden Widerstandes kann dabei auch von einem anderen, evtl. schon vorhandenen Bauelement, z.B. einer Zenerdiode, mit übernommen werden.

Die Erfindung wurde an einem Beispiel mit einer zweiadrigen Anschlussleitung erläutert. Es liegt jedoch im Rahmen der Erfindung, die beschriebenen Massnahmen mit den gleichen Vorteilen auch bei einer mehradrigen Anschlussleitung einzusetzen.

## Patentansprüche

1. Schaltungsanordnung zum Überspannungsschutz von über eine Anschlussleitung (AL) angeschalteten elektronischen Anschlussschaltungen für Endstellen der Fernmelde-, insbesondere der Fernschreibtechnik, mit Überspannungsableitern (U1, U2), die von den Adern (a, b) der Anschlussleitung (AL) zum Masseanschluss (M) von Anschlussgeräten (G) geschaltet sind, sowie mit einer Längsinduktivität (L1, L2) und bedarfsweise einem Widerstand (R1, R2) in jeder Ader (a, b), die zusammen mit einem zwischen die Adern (a, b) oder von den Adern (a, b) zum Masseanschluss (M) des Anschlussgerätes (G) geschalteten Kondensator (C3; C1, C2) einen Spannungsteiler bilden, dadurch gekennzeichnet, dass mindestens eine Ader (a, b) der Anschlussleitung (AL) über einen Widerstand (R3, R4) mit hohem Widerstandswert mit dem Masseanschluss (M) des die zu schützende Anschlussschaltung enthaltenden Anschlussgerätes (G) verbunden ist.

2. Schaltungsanordnung nach Anspruch 1, dadurch gekennzeichnet, dass bei einer mehradrigen Anschlussleitung (AL) sämtliche Adern über jeweils einen hochohmigen Widerstand mit dem Masseanschluss (M) des Anschlussgerätes (G) verbunden sind.

3. Schaltungsanordnung nach Anspruch 2, dadurch gekennzeichnet, dass bei mehradrigen Anschlussleitungen (AL) nur eine Ader (z.B. a) über einen Widerstand (z.B. R3) mit dem Masseanschluss (M) des Anschlussgerätes (G) verbunden ist und die übrigen Adern (z.B. b) über Widerstände (R5) mit dieser Ader (z.B. a) verbunden sind.

## Claims

1. Circuit arrangement for the overvoltage protection of electronic connection circuits, which are connected via a connection line (AL), for end stations in telecommunications technology, in particular teleprinter technology, comprising overvoltage diverters (U1, U2) which are connected from the wires (a, b) of the connection line (AL) to the earth terminal (M) of connection devices (G), and comprising a longitudinal inductance (L1, L2) and, as and when required, a resistor (R1, R2) in each wire (a, b) which together with a capacitor (C3; C1, C2), which is switched between the wires (a, b) or from the wires (a, b) to the earth terminal (M) of the connection device (G), form a voltage divider, characterised in that at least one wire (a, b) of the connection line (AL) is connected by means of a resistor (R3, R4) having a high resistance value to the earth terminal (M) of the connection device (G) which contains the connection circuit to be protected.

2. Circuit arrangement as claimed in claim 1, characterised in that in a multi-wire connection line (AL), each wire is connected via a high-ohmic resistor to the earth terminal (M) of the connection device (G).

3. Circuit arrangement as claimed in claim 2, characterised in that in multi-wire connection lines (AL), only one wire (e.g a) is connected via a resistor (e.g R3) to the earth terminal (M) of the connection device (G) and the remaining wires (e.g. b) are connected via resistors (R5) to said wire (e.g. a).

## Revendications

1. Montage pour la protection contre des surtensions de circuits électroniques de raccordement, par l'intermédidiare d'une ligne de raccordement (AL) de postes d'abonnés de la technique des télécommunications, plus particulièrement de la technique des téléscripteurs, avec des dispositifs dérivant les surtensions (U1, U2) montés entre les fils (a, b) de la ligne de raccordement (AL) et la borne de masse (M) d'appareils de branchement ou périphériques (G), et avec une inductance série (L1, L2), ainsi qu'éventuellement avec une résistance (R1, R2) dans chaque fil (a, b), les deux résistances formant, avec un condensateur (C3; C1, C2) monté entre les fils (a, b) ou monté entre les fils (a, b) et la borne de masse (M) de l'appareil de branchement (G), un diviseur de tension, caractérisé par le fait qu'au moins l'un des fils (a, b) de la ligne de raccordement (AL), est relié, par l'intermédiaire d'une résistance (R3, R4) de forte valeur ohmique, à la borne de masse (M) de l'appareil de branchement (G) contenant de circuit de raccordement.

2. Montage selon la revendication 1, caractérisé par le fait que dans le cas d'une ligne de raccordement (AL) comportant plusieurs fils, tous les fils sont reliés respectivement par l'intermédiaire d'une résistance fortement ohmique à la borne de masse (M) de l'appareil de branchement (G).

3. Montage selon la revendication 2, caractérisé par le fait que dans le cas d'une ligne de raccordement (AL) comportant plusieurs fils, seul un fil (par exemple a) est relié par l'intermédiaire d'une résistance (par exemple R3) à la borne de masse (M) de l'appareil de branchement (G), les autres fils (par exemple b) étant reliés par l'intermédiaire de résistances (R5) avec ce fil (par exemple a).